# EUROPEAN PATENT APPLICATION

(11) **EP 1 154 557 A1**
(43) Date of publication of application: **14.11.2001**
(21) Application number: 01850077.7
(22) Date of filing: 27.04.2001
(51) Int. Cl.: H02P 7/68, H02P 7/00

(54) **Motor control circuit**

(30) Priority: 10.05.2000 SE 0001723
(71) Applicant: Svenska Kenab Karlshamns Ergonomi AB, 370 10 Bräkne-Hoby (SE)
(72) Inventor: Nilsson, Kenth, 374 37 Karlshamn (SE)
(74) Representative: Berglund, Gustav Arthur

(57) **Abstract**

A circuit for controlling the operation of a plurality of electric direct-current motors (3) connected in parallel and each having a first connection (4) and a second connection (7) comprises a direct-current source (2) with two poles. Moreover the circuit comprises a first means (6) for connecting the first connection (4) of all the direct-current motors (3) to one of the two poles of the direct-current source (2), and a second means (10) for selective electric connection of the second connection (7) of each direct-current motor (3) with one or the other of the two poles of the direct-current source (2) via a pair of transistors (8, 9) for each direct-current motor (3).

## Description

### Field of the Invention

The present invention relates to a circuit for controlling the operation of a plurality of electric direct-current motors connected in parallel and each having a first connection and a second connection, said circuit comprising a direct-current source with two poles.

### Background Art

There are many applications in which a plurality of electric direct-current motors operate in parallel to carry out something, for instance raising or lowering the table-top of a table.

The control of a plurality of direct-current motors normally requires many components. In conventional technique, use is made of, for example, two relays and one transistor to make a direct-current motor operate in two different directions, which is disclosed in EP-A2-0,945,976. With a plurality of motors, an undesirably great amount of components is necessary to control their directions of operation.

By using the condition that the direct-current motors in several applications should never operate in different directions at the same time, the number of necessary components can be drastically reduced. US-A-4,288,726 discloses a circuit which uses this condition. However, this has two motor banks which cannot be used simultaneously, and consequently the capacity of the motors cannot be used optimally.

A further drawback of the circuit according to US-A-4,288,726 is that it has a long deceleration time, which means that the direct-current motors continue to operate a while after deceleration. It will then be difficult to carry out the control with precision, and many small adjustments may be required, especially when a certain predetermined position is to be reached.

### Summary of the Invention

A first object of the present invention is to provide easy control of electric direct-current motors connected in parallel, said control requiring a small number of components. A second object of the invention is that at the same time the control should allow quick deceleration. A third object of the invention is also to provide a durable circuit.

The objects are achieved by the circuit being given the features that are defined in claim 1. Preferred embodiments are evident from the dependent claims.

Thus, the circuit comprises a first means for connecting the first connection of all the direct-current motors to one of the two poles of the direct-current source, and a second means for selective electric connection of the second connection of each direct-current motor with one or the other of the two poles of the direct-current source via a pair of transistors for each direct-current motor.

The two transistors in said pair are thus connected between the second connection of the respective direct-current motor and a respective one of the two poles of the direct-current source, which means that zero voltage can be applied over the direct-current motor by short-circuiting the first and second connections of the direct-current motor. Thus, the direct-current motor can be made to decelerate very rapidly. This function cannot be achieved with a smaller number of components.

Use of transistors instead of relays gives additional advantages. The controllability is improved in general by the reaction time of a transistor being shorter than that of a relay. Moreover, there are no movable parts, which means that no wear occurs in normal operation. Moreover, a current limit to the direct-current motors can easily be obtained be controlling the conductivity of the transistors. More specifically, the second means can be adapted to regulate the current to each direct-current motor via the respective transistors for controlling or at least limiting the speed of rotation of the direct-current motor.

The first means, which is adapted to control which pole of the direct-current source is connected to the first connection of all direct-current motors, comprises a relay according to one embodiment of the invention.

This results in appropriate control of the working direction of the direct-current motors since this need not be rapidly switched.

According to another embodiment, the first means may comprise two transistors. This gives the advantages of transistors compared with relays, but involves on the other hand two components which are to be controlled for switching the working direction of the direct-current motors.

Preferably, the transistors are MOS transistors, which allows easy control of the transistors.

### Brief Description of the Drawings

The present invention will now be described in more detail with reference to the accompanying drawing.

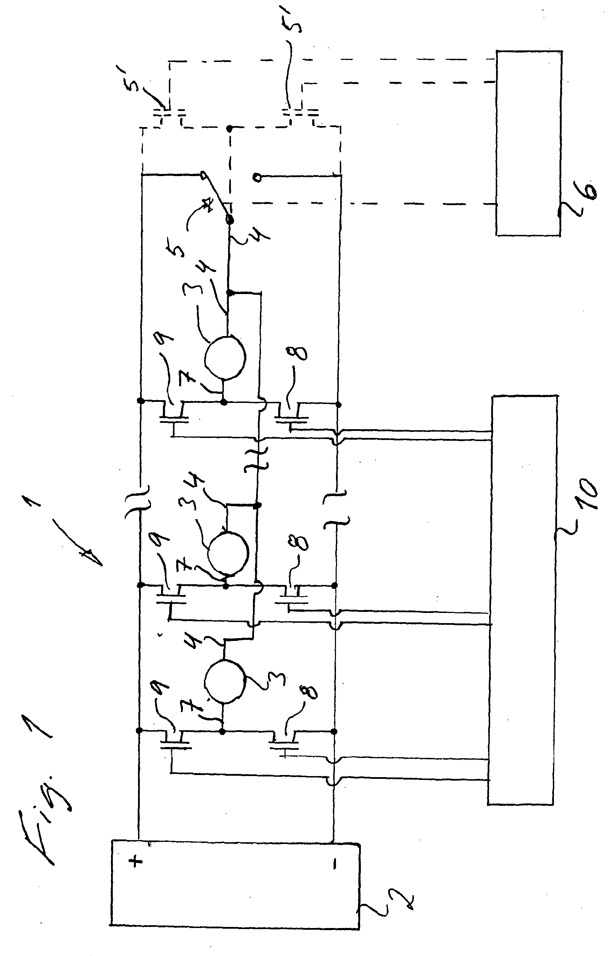

Fig. 1 is a wiring diagram for a motor bridge according to the invention.

### Detailed Description of a Preferred Embodiment

Fig. 1 is a wiring diagram for a preferred embodiment of a circuit 1 according to the present invention. The circuit 1 consists of a direct-current source 2 which operates a number of electric direct-current motors 3 connected in parallel. The electric direct-current motors 3 can be operated in two directions, but they work in parallel to achieve a certain object, preferably regulating the height of a vertically adjustable table by controlling the length of each of the table legs. The direct-current motors 3 can then be controlled in parallel since there is reason to simultaneously operate two direct-current motors 3 in opposite directions.

The invention uses the fact that the direct-current motors 3 are connected in parallel and therefore have a minimum number of components with retained controlling capacity. The electric direct-current motors 3 have one connection 4 directly connected to a common node (also designated 4). This node 4 can be connected to an optional pole of the direct-current source 2, which is carried out by means of a relay 5 according to one embodiment and by means of two transistors 5' according to another embodiment (indicated by dashed lines). A first control means 6 is adapted to control the relay 5 and the transistors 5' respectively.

In the embodiment involving the relay 5, this can be set by the first control means 6 in such manner that the node 4 is connected to an optional pole of the direct-current source 2. In dependence on to which pole of the direct-current source the first connections of the direct-current motors 3 are connected, the direct-current motors 3 are operated in a predetermined direction.

In the embodiment involving the transistors 5', they can either be made to interrupt a current path or keep it open. Of the two transistors 5', one is connected in the current path between the node 4 and the positive pole of the direct-current source 2, and the other is connected between the node 4 and the negative pole of the direct-current source 2. The one of the transistors 5' which is controlled to keep its current path open connects the node 4 to the corresponding pole of the direct-current source 2.

The second connection 7 of each direct-current motor 3 is connected both to the positive pole of the direct-current source 2 and to its negative pole. In each connection, there is a MOS transistor 8 and 9 respectively connected in order to alternatively interrupt or open the respective current paths.

Controlling of the operation of the direct-current motors 3 begins by determining in which direction they are to operate.

The relay 5 is set by the control means 6 in such manner that the node 4 is connected to the desired pole of the direct-current source 2. Fig. 1 shows the node 4 connected to the positive pole of the direct-current source 2.

Alternatively, the control means 6 causes the one of the transistors 5' which is in the connecting path between the node 4 and the desired pole of the direct-current source to conduct and thus open the current path, so that the node 4 will be conductively connected to the desired pole. The other one of the transistors 5' is caused to be non-conductive by the control means 6, so that its current path remains interrupted.

Subsequently, each direct-current motor 3 can be put in operation by a corresponding transistor 8 which is connected between the second connection 7 of the direct-current motor 3 and the second (in this case, negative) pole of the direct-current source 2 being activated. The direct-current motor 3 can alternatively be selected not to be activated by the current path not being opened. In this way, it is possible to control the number of direct-current motors 3 which is required to operate simultaneously.

When a direct-current motor 3 is to be stopped, rapid deceleration takes place by zero voltage being applied. This is carried out by the conductive transistor 8 between the second connection 7 of the direct-current motor and the direct-current source 2 first being switched off, i.e. being made non-conductive. Subsequently the second transistor 9 between the second connection 7 of the direct-current motor 3 and the direct-current source 2 is switched on, i.e. made conductive. The direct-current motor 3 concerned will then detect zero voltage and the voltage generated in the direct-current motor 3 owing to the rotation thereof will generate a current in the direction opposite to the previous direction, which decelerates the direct-current motor. When the direct-current motor 3 stops, the current will once more be zero.

The transistors 8, 9 are controlled by a second control means 10 in a conventional manner by regulating the control voltage to the gate of the transistors 8, 9. The second control means 10 will also monitor that the current through the direct-current motor 3 does not exceed a predetermined value. For instance, a shunt can detect the current to the direct-current motor 3 and compare it with a maximum value. If this is exceeded, the second control means limits the conductivity of the transistor 8 and 9 respectively, and thus the current decreases. At the same time also the torque of the direct-current motor 3 will be limited, thereby preventing any damage. This is particularly good to prevent excessive currents when switching on or when the direct-current motor 3 operates with a low load.

It will be appreciated that a number of expert modifications can be made to the invention without extending the scope thereof, as defined by the appended claims. For instance, the transistors may consist of another type of transistor instead of a MOS transistor, such as JFET transistors.

## Claims

1. A circuit for controlling the operation of a plurality of electric direct-current motors (3) connected in parallel and each having a first connection (4) and a second connection (7), said circuit comprising a direct-current source (2) with two poles, **characterised** in that the circuit comprises a first means (5, 5', 6) for connecting the first connection (4) of all the direct-current motors (3) to one of the two poles of the direct-current source (2), and a second means (10) for selective electric connection of the second connection (7) of each direct-current motor (3) with one or the other of the two poles of the direct-current source (2) via a pair of transistors (8, 9) for each direct-current motor (3).

2. A circuit as claimed in claim 1, wherein the first means (5, 5', 6) comprises a relay (5).

3. A circuit as claimed in claim 1, wherein the first means (5, 5', 6) comprises two transistors (5').

4. A circuit as claimed in any one of claims 1-3, wherein the transistors (5', 8, 9) are MOS transistors.

5. A circuit as claimed in any one of claims 1-4, wherein the second means (10) is adapted to connect the second connection (7) of each direct-current motor (3) with the same pole of the direct-current source (2) as the one to which the first connection (4) of the direct-current motor is connected for active deceleration of the rotation of the direct-current motor (3).

6. A circuit as claimed in any one of claims 1-3, wherein the second means (10) is adapted to control the current to each direct-current motor (3) via the respective transistors (8, 9) for controlling the speed of rotation of the direct-current motor (3).
